# EUROPEAN PATENT APPLICATION

(11) **EP 4 239 422 A1**
(43) Date of publication of application: **06.09.2023**
(21) Application number: 22159498.9
(22) Date of filing: 01.03.2022
(51) Int. Cl.: G05B 19/042, G06Q 10/10

(54) **SYSTEM AND METHOD FOR INTERACTIVE PROCESS AUTOMATION**

(71) Applicant: Unify Patente GmbH & Co. KG, 81739 München (DE)
(72) Inventor: Werner, Carsten, 20357 Hamburg (DE); Maetz, Tobias, 47877 Willich (DE)
(74) Representative: Schaafhausen Patentanwälte PartGmbB

(57) **Abstract**

The present invention relates to a system (10) and a method for Interactive Process Automation, wherein users' interactional time with multiple Graphical User Interfaces (GUIs) and different interfaces is reduced by a human-centric guidance through the right process with the right information at the right time. Thereby, the system (10) and method provide data as well as collect valuable data output throughout any process and user interactions. The system (10) itself can be established without the need to run an own GUI/interface. However, it may have an own GUI/interface, or it may use specific communication protocols built in. On purpose, the application is rather supposed to run through and by multiple modules being connected to other interfaces via APIs so that it may act as an (data) overlay hub for connected processes with heterogenous underlaying IT (applications). By this, it also enables mobile workers and consumers to (fully) participate through (their) mobile environments. An integrated flow description interpreter in a Flow Definition element (70) reads user provided flow definitions from flow definition files (71) and controls related actions in a Central Processing entity (20), making the system (10) easily adaptable to new tasks and changes in the mapped processes.

## Description

The present invention relates to a system and a method for Interactive Process Automation, wherein users' interactional time with multiple Graphical User Interfaces (GUIs) and different interfaces is reduced by a human-centric guidance through the right process with the right information at the right time. Thereby, the system and method provide data as well as collect valuable data output throughout any process and user interactions. The system itself can be established without the need to run an own GUI/interface. However, it may have an own GUI/interface, or it may use specific communication protocols built in. On purpose, the application is rather supposed to run through and by multiple modules being connected to other interfaces via APIs so that it may act as an (data) overlay hub for connected processes with heterogenous underlaying IT (applications). By this, it also enables mobile workers and consumers to (fully) participate through (their) mobile environments. An integrated flow description interpreter in a Flow Definition element reads user provided flow definitions from flow definition files and controls related actions in a Central Processing entity, making the system easily adaptable to new tasks and changes in the mapped processes. Decarbonization effects are achieved through less email traffic, less (permanent/ leftover) messages and lesser retention time as well as less website views with shorter stays by creating rather an outcome-related communication and interaction process environment with users and/or other systems when applying the invented methodology. The system and method are fully integrated, capture and structure content and make it reusable on purpose/demand, enabling users to directly use their collaboration tool (text, speech, or gesture) as a bridge to embedded process elements and notations of any kind. Thereby, system or method events can trigger multiple other elements, modules, users, and actions simultaneously and in real-time. Thereby, the system or method serves to enable full mobility and secured mobile access to certain (company owned) systems and information by using only a mobile device and without direct access to the company's network or websites. If integrated in or connected to an even lesser CO² producing messaging element than used by the average worker or consumer, carbon footprint would be even more reduced.

In today's governments, offices, organizations, universities, enterprises or even in the military and other crisis cooperation groups people need to consider and follow certain processes. Such processes may involve different (end user) technology, different steps, different people from heterogenous groups, different sourced information or even different documents which must be filled out or assigned. Nowadays, these steps, experts, information snippets or documents are often provided via computer-aided tools or specific applications. However, in complex processes a plurality of different applications or software is often used, and the process definition is often decoupled from underlying tools. Multiple applications or interfaces are used for different purposes, surrounded by communication with other people involved. Little data is captured on (proven) necessity of processes, related steps, and compliant user behavior or whether the information provided (in a static way) to the user was helpful or not. For users, complex and ever-changing Graphical User Interfaces (GUIs) are the norm.

Forwarding data from one tool to another is often a manual step. Certain products make use of one or the other (3^{rd} party product) integration. However, in most of the above-mentioned entities there is no overlaying single data and process hub - neither for back office related activities nor for the (end) user interacting processes. Thus, lacking tool-integrated active guidance (governance) and flexibility. (Non-personal) Data is often captured in silos or archives, if at all.

Today it is difficult to engage with the right persons and resources (e. g. information, documents) at the right time with non-aligned multiple step process flows and related systems. This produces mentionable non-productive efforts in most of the above- mentioned entities and organizations. Little data is captured here as well. Therefore, digitalization strategies from these entities and organizations suffer because of lacking data and (internal) knowledge. In addition, carbon footprints are still high in the collaboration area, mainly because of massive influx and storage of emails in many enterprises.

Most of such processes and tasks in an enterprise organization are related to a certain outcome, e. g. documentation of working hours, (business) travel or more complex approvals, documentation of projects or duties, capturing data that is crucial for human resources or management decisions, user, patient or customer engagements or solving issues, etc. Even if people make use of integrated communication platforms or software, there are still some major pitfalls. On the one hand there is the huge number of different mixed media channels and tools and a vast number of different GUIs. On the other hand, there is usually no integrated guidance, or sufficient support applied to a specific case. Further, there is little (connected) capture and provision of data because of split in processes. And eventually, mostly the user must find his/her way through crowded and unstructured (group) conversations or forums.

The current solution for process guidance in the state of the art is often a complex description of the process to be implemented, the documents describing the process make use of textual descriptions, and drawings - often realized as flow diagrams. Milestone definitions are used to track the progress and to trigger actions. Tools in the state of the art allow users or administrators to launch specific actions (send an email, post a message, start an application or a script, etc.) based on the occurrence of a defined event (an incoming email, fax, call, messenger, alarm, etc.). There are several other so called "Low Code" or "No Code" automation tools in the field, like IFTTT (If This Then That). Some of them are web-based, some are desktop tools. Consumers and end users are in most cases referred to an organizations or a company's own website, some with more advanced integrated guidance than others, but usually the user needs to search his/her way through often overloaded systems without natural language supported human- and purpose-centric guidance and without an ongoing, recurringly known user experience.

However, these tools described in the state of the art are not designed as an overlay using a single or non-GUI. Traditional automation tools are designed for automation purposes by keeping existing working environments, identifying repetitive tasks, and reducing the human work by executing same tasks automatically. Process descriptions are predefined with limited data/knowledge about functioning processes and related tasks in practice. There is little or no possibility for continuous process adjustment and alignment on real usage as well as usability of processes and tools (GUIs) in place. Furthermore, these systems have limited capability to adapt to different regions, size and subject specificities within only one process definition and local breakouts cause loss of data and control. It is often very costly and time-consuming to change the flow processes (GUI, definitions, internal communication). Even if collaboration suites are in place, there are still the following disadvantages. On the one hand, a chronological order of messages does not allow retrievability of content and a specific structure and consolidation of relevant information. On the other hand, relevant data is not extracted and stored hence not re-usable if needed. Usually, the purpose of modern collaboration tools is to reduce traffic and various media channels. However, there are still a plurality of crowded conversations as they are unstructured with a lot of tit-and-tat messages and many personal conversations for active people with various roles and different tasks (e. g. managers). Finally, leftovers or backlogs from resolved problems or finished tasks prevent users to focus on substantial priorities.

Therefore, the present invention is based on the object to provide a system and a corresponding method for Interactive Process Automation to overcome the aforementioned problems of the state of the art solutions. In particular, a system and a method to support users by engaging processes without having the users to interact with multiple applications or GUIs for specific purposes.

This object is solved by a system having the features according to claim 1 and a method having the features of claim 13. Preferred embodiments of the invention are defined in the respective dependent claims.

According to the invention, a system for Interactive Process Automation is provided, wherein the system is adapted to run through one or more predefined flow processes, wherein the system comprising:
- a central processing entity configured to coordinate and process data and functions of modules and elements;
- a message Input/Output (I/O) element configured to handle incoming prompts and/or outgoing messages;
- at least one collaboration and communication module which is connected to the message I/O element and is configured to enable a communication between a user and the central processing entity;
- a buffer element which is configured to read a set of files;
- a flow definition element which is configured to initiate a predefined process flow; and
- a logging element configured to log files in an external storage for further analysis.

Thereby, the system with support of the central processing entity starts and runs through one or more process flows, however, is also influenced in real-time by the data provided by users during a specific process. Thereby, the flow definition element is predefined for one or more specific process or process flow but flexible and adaptable in order to follow custom processes of any kind. Further, interactions related to the process flows can happen in different tools, software or applications that are connected to the system. The data exchanged between users and system is thereby brought into context. Thus, if for instance part of one project connected process flows can have an almost unlimited time horizon but can also be very limited in a lifecycle, the system provides an overlay function (logging) in order to connect per unique identifiers all, the contextual (project) data from different tools, applications and user interactions into context across these different tools. The system can be configured as a finite state machine which follows a programmable flow defined with the flow definition element. The system is a platform-independent even multi-platform capable and programmable system for interactive process automation.

According to a preferred embodiment, the system further comprising a data exchange element configured to import and/or export data from external modules and/or wherein the data exchange module is implemented inside the central processing entity.

According to another preferred embodiment of the system, the buffer element, the flow definition element, the message I/O element and/or the logging element is/are implemented inside the central processing entity.

According to still another preferred embodiment, the system further comprising a language module configured to receive input data via a language capture and display tool, wherein the language module is connected to the message I/O element and configured to translate input data to a common input format of the central processing entity and/or configured to receive and translate output data to a dedicated output format for the at least one communication module. Input data may be present in form of a user's voice.

Further, according to a preferred embodiment, the system further comprising a database exchange element with an attached database and/or a file server module with an attached file server connected to the data exchange element as part of the central processing entity, configured to provide or store data.

According to yet another preferred embodiment, the system further comprising a file system module connected to the buffer element configured to store a set of files for the buffer element to load.

According to yet another preferred embodiment of the system, the buffer element is a quick display buffer configured to instantly display a limited set of files on startup of the system and/or on demand of the system.

According to yet another preferred embodiment the system, further comprising an artificial intelligence (Al)/machine learning (ML) module which is connected to the central processing entity and is configured to combine and analyze data of different modules and/or elements in order to optimize the output data, and/or to implement a self-learning process flow optimization for different processes.

The artificial intelligence (Al)/machine learning (ML) module is part of the system, however, it can also be provided as an external web service or in another form by a third party and thus connected to the system. At least, the modules as part of the system, are required to filter and harmonize data that is being processed throughout any process. The advantage of an external source is to change AI/ML providers if needed and to integrate AI/ML modules from Software providers so that this part is always utilizing state of the art progress. However, AI/ML algorithms need to be adapted to a specific program running in the system or in a module of the system, which is the target of optimization. For ML usually algorithms based on languages like R or Python are used but other suitable languages can also be used. For example, Web API can be used for analysis and normalization of incoming Language/Chat prompts, but other interfaces can also be used. A web API is an application programming interface for either a web server or a web browser. It is a web development concept, usually limited to a web application's client-side (including any web frameworks being used), and thus does usually not include web server or browser implementation details such as SAPIs or APIs unless publicly accessible by a remote web application.

According to yet another preferred embodiment, the system using application programming interfaces (APIs), wherein each system module is designed to address the API of a context-specific and/or user-specific data source or data link.

The inventive system can use APIs which are offered by other systems like external collaboration systems, database systems and/or storage solutions. The API functions are adopted and normalized within and by the different modules to be used by the central processing entity in a standardized format. This allows a configuration of flow definitions in the flow definition element. Thus, the systems specific input/output-modules are exchangeable and/or exist in parallel. Further, the modules of the system can be addressed in flow definitions by unique names.

According to yet another preferred embodiment of the system, the flow definition element using a flow definition configuration file to address different modules and/or elements with a unique name, wherein using a limited set of well-defined Data Exchange and Message I/O commands.

According to yet another preferred embodiment of the system, the flow definition configuration file comprising a sequence of tasks in different definition paths of the process flow which supports a user to achieve a desired outcome of the process flow, wherein according to these tasks, the central process entity addressing different functions of different modules and/or elements of the system.

According to yet another preferred embodiment of the system, wherein the at least collaboration and communication module is working in real-time and/or the user using the at least one collaboration and communication module as single interface or graphical user interface (GUI) during the whole process flow.

According to the invention, a corresponding method for Interactive Process Automation is provided, the method using a system according to the claims 1 to 12.

Usually, the system only has a single configuration file that incorporates multiple paths of a process flow, but generally, it is also possible to have several files in a single instance and/or activate multiple instances each running dedicated configurations. In the sense of the invention, an instance is every start of the program by a user. If the program has been started n times by users, this will result in n running instances.

According to a preferred embodiment, the method further comprises the steps:
- identifying, by a central processing entity, if a 1 to 1 communication with a user exists upon receiving a trigger signal from at least one of a user via a collaboration and communication tool of the user, a website, or QR-code scan by a user;
- identifying, by the central processing entity in cooperation with a message Input/Output element and an at least one collaboration and communication module, in case a 1 to 1 communication exists, if user input data exists;
- identifying, by the central processing entity in cooperation with the message Input/Output element and the at least one collaboration and communication module, in case user input data exists, a user intent;
- selecting, by the central processing entity in cooperation with a flow definition element, a flow definition configuration file for a process flow which matches with the user intent;
- processing, by the central processing entity, the process flow.

According to a preferred embodiment, the method further comprising the steps in case no 1 to 1 communication exists:
- creating, by the central processing entity in cooperation with a message Input/Output element and the at least one collaboration and communication module, a 1 to 1 communication and welcoming the user; and/or
- providing, by the central processing entity in cooperation with a buffer element and the message Input/Output element and the at least one collaboration and communication module, a set of options to select for the user.

According to another preferred embodiment, wherein the method using
- the central processing entity to coordinate and process data and functions of modules and/or elements according to the process flow;
- the message Input/Output (I/O) element to handle incoming prompts from the user and/or outgoing messages to the user;
- the at least one collaboration and communication module which is connected to the message I/O element to enable the communication between the user and the central processing entity;
- the flow definition element to initiate and process through the process flow; and using one or more of
- a buffer element to read a set of files for providing it to the user;
- a logging element to log files in an external storage for further analysis; and/or
- a data exchange element to import and/or export data from external modules;
- a language module connected to the message I/O element to translate input data to a common input format of the central processing entity and/or to receive and translate output data to a dedicated output format for the at least one communication module of the user; and/or
- an artificial intelligence (Al)/machine learning (ML) module which is connected to the central processing entity to combine and analyze data of different modules in order to optimize the output data, and/or to implement a self-learning process flow optimization for different processes; and/or
- application programming interfaces (APIs), wherein each module is designed to address the API of a specified data source or data link; and/or
- a flow definition configuration file to address different modules and/or elements with a unique name, wherein using a limited set of well-defined Data Exchange and Message I/O commands; and/or
- a sequence of tasks in different definition paths of the process flow which supports the user to achieve a desired outcome of the process flow, wherein according to these tasks, the central process entity addressing different functions of different modules and/or elements; and/or
- wherein the at least collaboration and communication module is working in real-time and/or the user using the at least one collaboration and communication module as single interface or graphical user interface (GUI) during the whole process flow.

According to yet another aspect of the present invention, a program element is provided, which when being executed by a processor is adapted to carry out steps of the method for Interactive Process Automation.

According to another aspect of the present invention, a computer-readable medium comprising program code is provided, which when being executed by a processor is adapted to carry out steps of the method for Interactive Process Automation.

A computer-readable medium may be a floppy disk, a hard disk, an USB (Universal Serial Bus) storage device, a RAM (Random Access Memory), a ROM (Read Only Memory) or an EPROM (Erasable Programmable Read Only Memory). A computer readable medium may also be a data communication network, e. g. the Internet, which may allow downloading a program code.

According to another aspect of the present invention, it is also possible that individual or all modules, elements, tools, applications and/or software are integrated locally into the system. It is also possible that some or all of the modules, elements, tools, applications and/or software are decentralized and external but connected to the elements and the entity of the system.

Today governments, offices, organizations, universities, and/or enterprises make use of fragmented and often heterogenous software environments, confronting users with multiple GUIs, forms and other distracting switches in applications. What is missed in today's IT environments is a homogenous human-centric interface, ideally even without any GUI whatsoever.

The present invention provides a lean interactive process guidance bridging users' interaction with any kind of process applications. Hence, enables self-optimization for processes and automation, ideally through the use of machine learning (ML), fed by interactional data from its users. Information is shared both ways (Push and Pull). Thus, outputs generate both process related trends prediction as well as data on each process step and its usage and/or compliance. Thereby, the users experience less GUIs and spend much less time on both search activities and interaction with those systems (GUls). Entities like governments, offices, organizations, universities and enterprises benefit through centrally sourced data. With this, data driven decision-making based on almost real-time data may be enabled.

Side applications (e. g. to search and connect to a support or an expert) provide benefits to the above-mentioned entities and help self-establishing a new way to work by raising acceptance through immersive user experience. No GUI user profiles mainly come self-administrated. Processes have built-in security, compliance, initialization methodologies and support users with situation-related information and supporting data (i. e. contacts, portfolio, documents, links, data forms, customer data or else) making usage of APIs to other databases. Messages to other persons can be sent to an "by-the-recipient(user)-defined" (preferred) collaboration tool per each process, if desired.

By using a system or method according to the present invention it leverages existing systems and platforms by making them more usable and user productive. Thereby, the solution according to the present invention can be built from small to big with highly flexible parameters and workflows as well as (local) individual adaptations. Finally, the present invention leverages both existing IT infrastructure and existing communication tools and acts as an agile overlay/bridge and information hub, also supporting the path from digital inclusion to digital (individual) enablement.

The system and method avoid crowded and unstructured group conversations which are usually used as a platform to exchange information and discuss project related topics. By creating lean and controlled 1 to 1 (one-to-one) breakout sessions between knowledge workers and/or a bot where questionnaires are answered for specific areas of responsibility, only the relevant information is copied back to a group conversation. Breakout sessions are only relevant (and visible) for the moment of the dialogue. Relevant output data is captured and therefore stored in a database as well. Once approvals are granted for areas of responsibility, they will be instantly visible in the group conversation at first sight as centralized information which keeps being updated over time, i. e. status on desired outcome, approvals, milestone achievements, or else.

It has also to be noted that aspects of the invention have been described with reference to different subject-matters. In particular, some aspects or embodiments have been described with reference to apparatus type claims whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed with this text. In particular combinations between features relating to the apparatus type claims and features relating to the method type claims are considered to be disclosed. The invention and embodiments thereof will be described below in further detail in connection with the drawing(s).
- Fig. 1: shows a schematic illustration of an overview about the system and its elements and modules according to an embodiment of the invention.
- Fig. 2: shows a schematic illustration of an overview about use cases of the system and/or the method according to an embodiment of the invention.
- Fig. 3: shows a flowchart of the initial method steps according to another embodiment of the invention.
- Fig.4a/4b: shows a table of a set of well-defined Data Exchange and Message I/O commands which can be used in a flow definition configuration file to address different modules or tasks according to another embodiment of the invention.

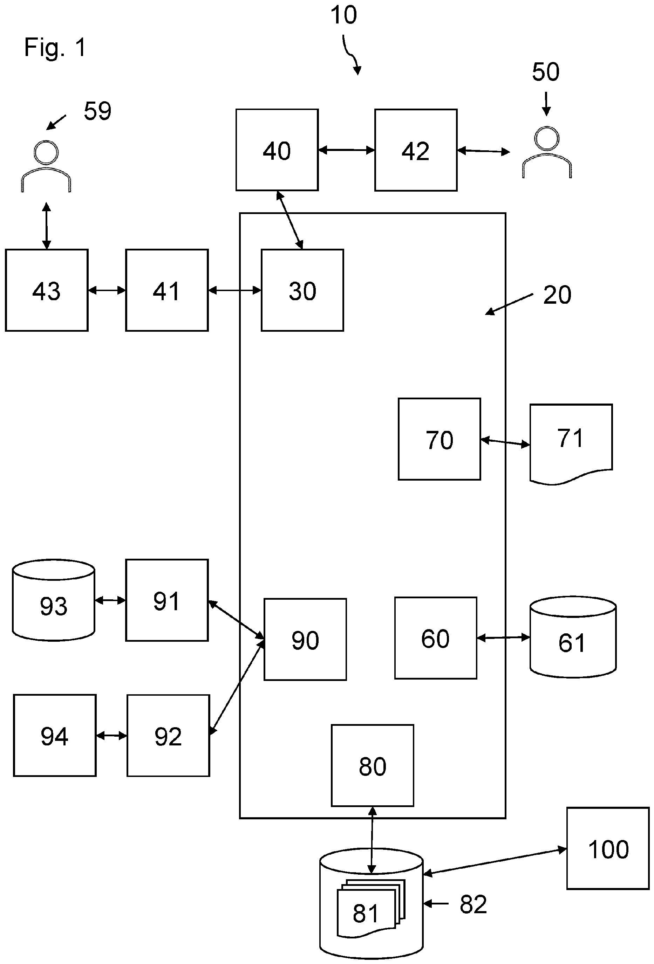

Fig. 1 schematically shows an overview about the system 10 and its elements and modules. Depicted is the system 10 with a central processing entity 20 which is configured to coordinate and process data and functions of modules and/or elements. A message Input/Output, I/O, element 30 which is configured to handle incoming prompts and/or outgoing messages from a user 50 or towards the user 50 respectively. Further, a collaboration and communication module 40 which is connected to the message I/O element 30 and which is configured to enable a communication between a user 50 and the central processing entity 20 via a user preferred collaboration and communication tool 42. Further, the system comprises a language module 41 which is configured to receive a user voice 59 via a language capture and display tool 43. The language module 41 is also connected to the message I/O element 30. The system further comprises a buffer element 60 which is configured to read a set of files which can be stored in a file system module 61 for the buffer element to load. The buffer element 60 may be a quick display buffer configured to instantly display a limited set of files on startup of the system 10 and/or on demand of the system 10. Further, the system 10 shows a flow definition element 70 which is configured to initiate a predefined process flow via a flow definition configuration file 71. This file 71 can address different modules and/or elements with a unique name and uses a limited set of well-defined Data Exchange and Message I/O commands. Moreover, the system 10 shows a logging element 80 configured to log files 81 in an external storage 82 for further analysis. Further, a data exchange element 90 is shown which is configured to import and/or export data. A database module 91 with an attached database 93 and a file server module 92 with an attached file server 94 connected to the data exchange element 90 are also depicted. These modules 91, 92 may also be directly connected to the central processing entity 20. As can be seen in Fig.1, the buffer element 60, the flow definition element 70, the message I/O element 30, the logging element 80 and the data exchange element 90 may be implemented inside the central processing entity 20. However, this is an option, and these elements can be implemented as external elements, too. The system 10 according to Fig.1 shows also a language module 41 connected to the message I/O element 30 and configured to translate input data to a common input format of the central processing entity 20 and/or configured to receive and translate output data to a dedicated output format for the at least one communication module 40. These modules 40, 41 can have artificial intelligence or NLP, natural language processing, implemented. However, it is also possible that such artificial intelligences can be added externally on demand if they are needed.

The system 10 according to Fig. 1 also shows an artificial intelligence, Al/ machine learning, ML, module 100 which is connected to the storage for the log files 82 of the logging element 80 and has access to the log files 81. This module 100 is configured to combine and analyze data of different modules and/or elements in order to optimize the output data, and/or to implement a self-learning process flow optimization for different processes. The system 10 also may use application programming interfaces, APIs, (not shown), wherein each module and/or element is designed to address the API of a specified data source or data link.

The various tools, software and applications 42, 43, 93, 94 that are connected to the system via the APIs, are accessed in a modular way supported by the different above-mentioned modules 40, 41, 61, 81, 91, 92. Harmonized data from or to required interfaces is processed in elements 30, 60, 70, 80, 90 which in combination constitute the central processing entity 20. Over time, the number of modules, that configure and modularize interfaces, will grow or change. Existing configurations and interfaces can be used and applied for several instances of the system.

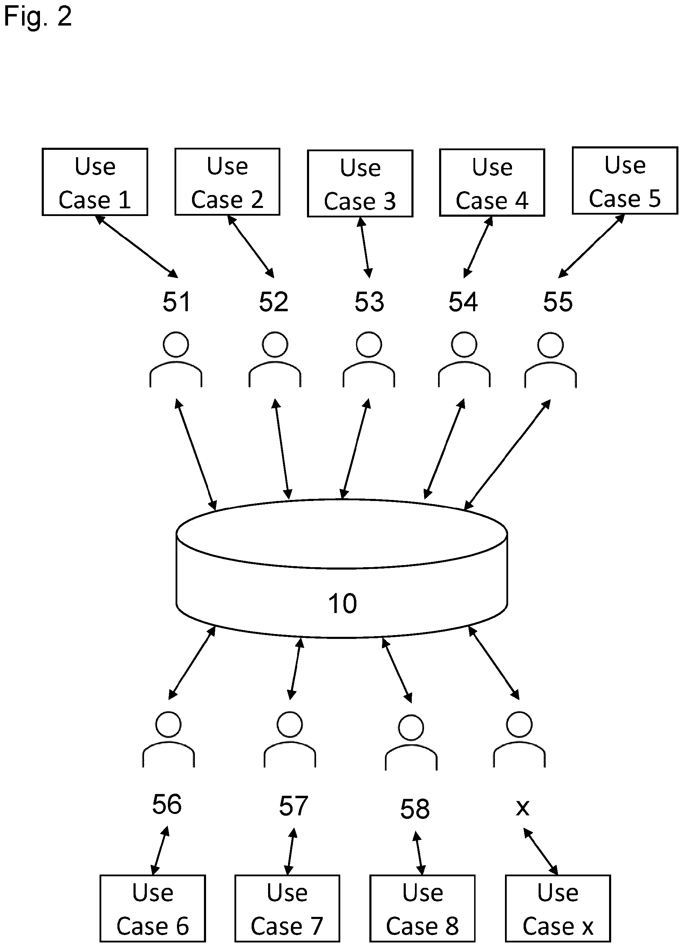

Fig. 2 shows in a schematic illustration an overview about use cases of the system and/or the method.

### Use case #1

For example, user 51 enables use case #1 of the system 10 which is "reporting of (working) hours or timekeeping". User 51 directly approaches the system 10 from its preferred device with its preferred collaboration and communication tool and reports its daily hours per text or voice (with NLP/NLU enabled in the system 10). Entries can be done within seconds (one sentence) instead of approaching a separate GUI for this purpose (couple of minutes). The present invention supports existing IT infrastructure and reporting tools but for the user 51 (routine) tasks would be fully integrated in its daily collaboration tool.

### Use case #2:

In this example, a low complexity case is described for "travel, resource or other kind of approvals". With this use case #2, a user 52 enables a transparent (e. g. travel, resources, etc.) approval policy for an organization, university or any other entity with minimal impact and need for quick adoption. Most entities have a portal in place which enables applications and their approvals. These portals enforcing dedicated authorization and sometimes come with complex GUIs. Once the trip is requested, there is a notification to the approver who then needs to enter the portal to approve the request. The present invention would support such process but avoids separate portal access and the dedicated (tool) authorization, hence, allows quicker procedure and time savings. It can also enable an extended approval mechanism to achieve a maximum cost control. Every trip can be approved with minimum impact on the time and effort spent for the approval process. In addition, there is no need for a dedicated tool as intelligent reports will gather the information for each travel approval event (request with destination, vehicle and reason; approval statement) from the system 10 log file system 82. Using the standard collaboration tool 42 (on mobile) of the user 52 avoids time spent for access and authorization of dedicated portals. It also allows user 52 to initiate or even receive the travel approval while he/she is already on the way to his/her vehicle.

### Use case #3:

In this example, a medium complexity case for "domestic nursing service" is described. According to this use case #3, administrative overhead from user 53 working in nursing services can be avoided, especially when the user 53 is mobile to care for people at home. There are plenty of administrative tasks (e. g. finding contacts, time registration, special medications, etc.) which need attention and are time consuming, especially if different apps, paper formats or other note drawing tools are normally used for that. The present invention makes use of the user's 53 preferred collaboration and communication tool installed on its mobile device. With the current inventive system 10 and method in place patient information can be shown up and the user 53 is able to take care of time registration with a simple acknowledgement (when coupled with location services this might also be an automatic function). Special treatments, medical conditions or specific medication for each patient can be displayed individually per case. If there is a need for management requests (billing, contract extension, changes), communication can be established directly. Once the treatment is finished, time registration will be easy by acknowledgement of the applied treatment. The user 53 will have the option to leave notes about the current visit and forward notes for the next one or might even leave a permanent note.

### Further use cases:

Use case #4: User 54 starts a project and receives guidance via system 10.
Use case #5: User 55 manages content updates via system 10.
Use case #6: User 56 searches for an expert or a Subject Matter Expert (SME) via system 10.
Use case #7: User 57 analyzes data and trends with the help of system 10.
Use case #8: User 58 receives or pulls its weekly report with system 10.
Use case #X: User X is guided via system 10 through a complete process flow cycle.

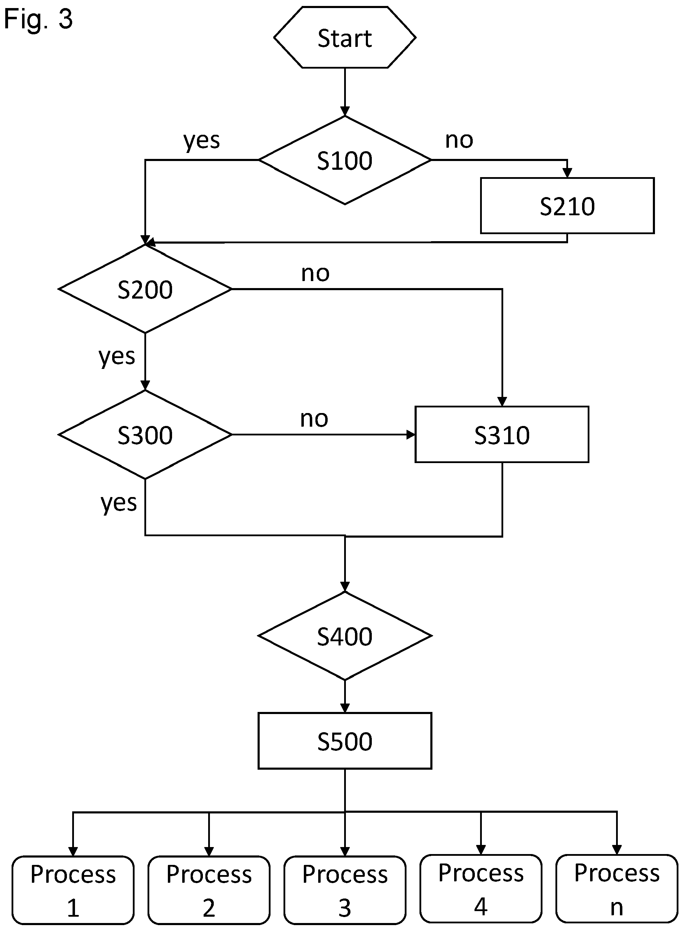

Fig. 3 shows a flowchart of the initial method steps. At the "Start" state a user triggers a central processing entity of the system with a defined action. For example, the user clicks on a (embedded) link or a button inside its preferred collaboration and communication tool. The central processing entity checks then in step S100 if the user is already known and if a 1 to 1 communication exists between the system and the user. The system may use a bot or else for the conversation with the user. In the case no 1 to 1 communication exists or the user is new, the central processing entity in cooperation with a message Input/Output element and the at least one collaboration and communication module in step S210 creates a 1 to 1 communication and welcoming the new user. The system may also query user data, like email address etc., from the user in this step. In step S200, the central processing entity in cooperation with a message Input/Output element and the at least one collaboration and communication module identifies if user input data is present. Then in the step S300, the central processing entity in cooperation with the message Input/Output element and the at least one collaboration and communication module identifies if a user intent is present. If a user input or intent is present, the content of the user input/intent may be screened by help of a Natural Language Understanding (NLU) entity in one of the aforementioned available modules or in an additional module of the system. In the case, no user input data or no user intent exists, then in step S310 the central processing entity in cooperation with a buffer element and the message Input/Output element and the at least one collaboration and communication module provides a set of options for the user to select. The central processing entity in cooperation with a flow definition element selects in the step S400 a flow definition configuration file for a process flow which matches with the user intent or the user's selection. Finally, in step S500, the central processing entity processes the selected process flow (Process 1 to n) according to the flow definition configuration file. Furthermore, timer may be selected which may start while the system is waiting for the user to make inputs or select options. When a timer runs out then the program goes back to "Start" state.

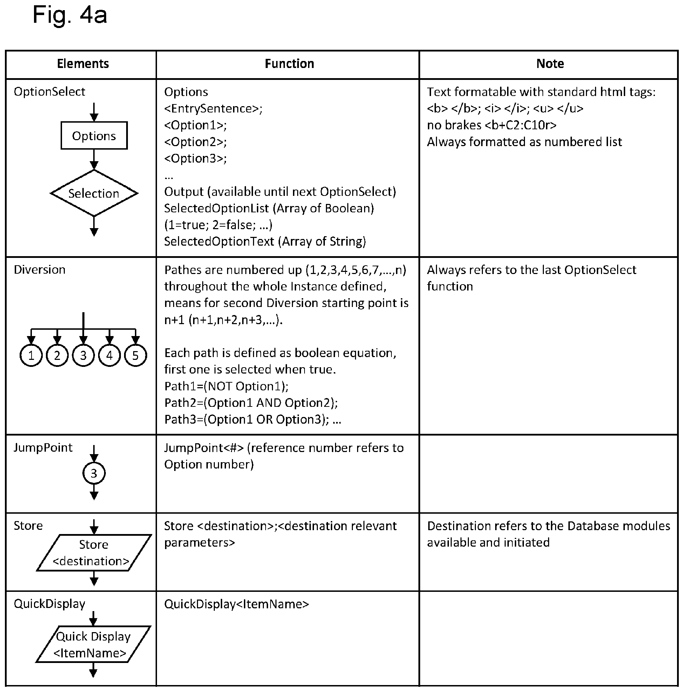

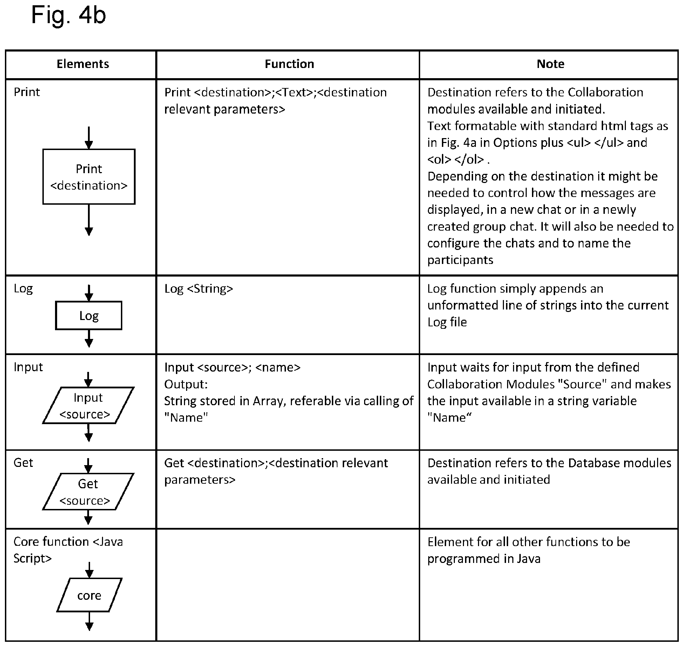

In Fig.4a/4b a table of flow definition configuration file command elements which address different modules and/or tasks is depicted.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

### Reference numerals

- 10: System
- 20: Central processing entity
- 30: Message Input/Output, I/O, element
- 40: Collaboration and communication module
- 41: Language module
- 42: Collaboration and communication tool
- 43: Language capture and display tool
- 50: User
- 59: User Voice
- 51 - 58: User 1 to 8
- X: User X
- 60: Buffer element
- 61: File system module
- 70: Flow definition element
- 71: Flow definition configuration file
- 80: Logging element
- 81: Log files
- 82: Storage for log files
- 90: Data exchange element
- 91: Database module
- 92: File server module
- 93: Database
- 94: File server
- 100: Artificial intelligence/machine learning module
- S100 - S500: Method steps S100 - S500

## Claims

1. A system (10) for Interactive Process Automation, wherein the system (10) is adapted to run through one or more predefined process flows, wherein the system (10) comprising:
- a central processing entity (20) configured to coordinate and process data and functions of modules and/or elements;
- a message Input/Output, I/O, element (30) configured to handle incoming prompts and/or outgoing messages;
- at least one collaboration and communication module (40) which is connected to the message I/O element (30) and to a collaboration and communication tool (42) of a user (50) and is configured to enable a communication between the user (50) and the central processing entity (20);
- a buffer element (60) which is configured to read a set of files;
- a flow definition element (70) which is configured to initiate a predefined flow process; and
- a logging element (80) configured to log files (81) in a storage (81) for further analysis.

2. The system (10) according to claim 1, wherein the system (10) further comprising a data exchange element (90) configured to import and/or export data from database module (91) and/or file server module ( 92) and/or wherein the data exchange element (90) is implemented inside the central processing entity (20).

3. The system (10) according to any of the preceding claims, wherein the buffer element (60), the flow definition element (70), the message I/O element (30) and/or the logging element (80) is/are implemented inside the central processing entity (20).

4. The system (10) according to any of the preceding claims, wherein the system (10) further comprising a language module (41) configured to receive input data via a language capture and display tool, wherein the language module (41) is connected to the message I/O element (30) and configured to translate input data to a common input format of the central processing entity (20) and/or configured to receive and translate output data to a dedicated output format for the at least one communication module (40).

5. The system (10) according to any of the preceding claims, wherein the system (10) further comprising a database module (91) with an attached database (93) and/or a file server module (92) with an attached file server (94) connected to the data exchange element (90) or the central processing entity (20), configured to provide or to store data.

6. The system (10) according to any of the preceding claims, wherein the system (10) further comprising a file system module (61) connected to the buffer element (60) configured to store a set of files for the buffer element (60) to load on demand.

7. The system (10) according to any of the preceding claims, wherein the buffer element (60) is a quick display buffer configured to instantly display a limited set of files on startup of the system and/or on demand of the system (10).

8. The system (10) according to any of the preceding claims, wherein the system (10) further comprising an artificial intelligence, Al/machine learning, ML, module (100) which is connected to the storage for log files (82) and is configured to combine and analyze data of different modules in order to optimize the output data and/or to implement a self-learning flow process optimization for different processes.

9. The system (10) according to any of the preceding claims, wherein the system (10) using application programming interfaces, APIs, wherein each module is designed to address the API of a specified data source or data link.

10. The system (10) according to any of the preceding claims, wherein the flow definition element (70) using a flow definition configuration file (71) to address different modules and/ or elements with a unique name, wherein using a limited set of well-defined Data Exchange and Message I/O commands.

11. The system (10) according to any of the preceding claims, wherein the flow definition configuration file (71) comprising a sequence of tasks in different definition paths of the flow process which supports the user (50) to achieve a desired outcome of the flow process, wherein, according to these tasks, the central process entity (20) addressing different functions of different modules and/or elements of the system (10).

12. The system (10) according to any of the preceding claims, wherein the collaboration and communication tool (42) is working in real-time and/or the user (50) using the collaboration and communication tool (42) as single interface or graphical user interface, GUI, during the whole flow process.

13. A method for Interactive Process Automation, wherein the method using a system (10) according to the claims 1 to 12.

14. The method according to claim 13, wherein the method further comprising the steps:
- S100 identifying, by a central processing entity (20) if a 1 to 1 communication with a user (50) exists upon receiving a trigger signal from at least one of a user (50) via a collaboration and communication tool (42) of the user (50), a website, or a QR-code scan by the user (50);
- S200 identifying, by the central processing entity (20) in cooperation with a message Input/Output element (30) and at least one collaboration and communication module (40), in case a 1 to 1 communication exists, if user input data exists;
- S300 identifying, by the central processing entity (20) in cooperation with the message Input/Output element (30) and the at least one collaboration and communication module (40), in case user input data exists, a user intent;
- S400 selecting, by the central processing element (20) in cooperation with a flow definition element (70), a flow definition configuration file (71) for a flow process which matches with the user intent;
- S500 processing, by the central processing entity (20), the flow process;
in case no 1 to 1 communication exists, further comprising:
- S210 creating, by the central processing entity (20) in cooperation with a message Input/Output element (30) and the at least one collaboration and communication module (40), a 1 to 1 communication and welcoming the user (50); and/or
- S310 providing, by the central processing entity (20) in cooperation with a buffer element (60) and the message Input/Output element (30) and the at least one collaboration and communication module (40), a set of options to select for the user (50) in case no user input data or no user intent exists.

15. The method according to claim 13 or 14, wherein the method using:
- the central processing entity (20) to coordinate and process data and functions of modules and/or elements according to the flow process;
- the message Input/Output, I/O, element (30) to handle incoming prompts from the user and/or outgoing messages to the user;
- the at least one collaboration and communication module (40) which is connected to the message I/O element (30) to enable the communication between the user (50) and the central processing entity (20);
- the flow definition element (70) to initiate and process through the flow process; and using one or more of
- a buffer element (60) to read a set of files for providing it to the user (50);
- a logging element (80) to log files (81) in a storage (82) for further analysis; and/or
- a data exchange element (90) to import and/or export data from external modules (91, 92);
- a language module (41) connected to the message I/O element (30) to translate input data to a common input format of the central processing entity (20) and/or to receive and translate output data to a dedicated output format for the collaboration and communication tool (42) of the user (50); and/or
- an artificial intelligence, Al/ machine learning, ML, module (100) which is connected to the storage (82) to combine and analyze data of different modules in order to optimize the output data, and/or to implement a self-learning flow process optimization for different processes; and/or
- application programming interfaces, APIs, wherein each module is designed to address the API of a specified data source or data link; and/or
- a flow definition configuration file (71) to address different modules and/or elements with a unique name, wherein using a limited set of well-defined Data Exchange and Message I/O commands; and/or
- a sequence of tasks in different definition paths of the flow process which supports the user (50) to achieve a desired outcome of the flow process, wherein, according to these tasks, the central process entity (20) addressing different functions of different modules and/or elements; and/or
- wherein the collaboration and communication tool (42) is working in real-time and/or the user (50) using the collaboration and communication tool (42) as single interface or graphical user interface, GUI, during the whole flow process.
